# EUROPEAN PATENT SPECIFICATION

(11) **EP 3 379 667 B1**
(45) Date of publication and mention of the grant of the patent: **25.11.2020**
(21) Application number: 18161771.3
(22) Date of filing: 14.03.2018
(51) Int. Cl.: H02G 5/06

(54) **INSULATOR FOR INSTALLATION IN A HIGH-VOLTAGE SWITCHING SYSTEM**
ISOLATOR ZUM EINBAU IN EINER HOCHSPANNUNGSSCHALTANLAGE
ISOLATEUR POUR L'INSTALLATION DANS UN SYSTÈME DE COMMUTATION HAUTE TENSION

(30) Priority: 21.03.2017 LU 100145
(43) Date of publication of application: 26.09.2018
(73) Proprietor: ABB Power Grids Switzerland AG, 5400 Baden (CH)
(72) Inventor: Elser, Pierre, 8005 Zürich (CH); Aschwanden, Pia, 6410 Goldau (CH); Rybak, Andrzej, 30-732 Kraków (PL); Siwek, Artur, 31-421 Kraków (PL); Platek, Robert, 30-719 Kraków (PL)
(74) Representative: Michalski Hüttermann & Partner Patentanwälte mbB

(56) References cited:
- EP-A1- 0 457 081
- GB-A- 1 217 810

## Description

### TECHNICAL FIELD

Embodiments of the present disclosure relate to sealing of high voltage and high current systems. In particular, embodiments of the present disclosure relate to sealing of gas insulated switchgears (GIS) or generator circuit breakers (GCB) compartments. More specifically, embodiments of the present disclosure relate sealing of insulators provided in insulated switchgears or generator circuit breakers compartments.

### BACKGROUND

In gas insulated switchgears and circuit breakers, at least one compartment has to be sealed. Since the conductor has to be insulated going out of the compartment, the insulator itself has to seal between two compartments or to the outside. Conventionally, the sealing is done using an EPDM (ethylene propylene diene monomer) rubber or an acrylonitrile-butadiene rubber (NBR) sealing ring, for instance a sealing O-ring. Accordingly, different gases will have different permeation rates through these sealings, depending on the material of the sealing. In addition, desorption, outgassing and aging of such polymeric sealings, e.g. O-rings, is not well understood and rises a lot of problems during development and lifetime prediction.

For example, conventional GIS installations are sealed by means of O-rings made of EPDM rubber. Such sealing material fulfill the IEC 62271 standard with requirement of maximum gas loss of 0.5%/year. Insulating gas leakage, especially for GIS installations in which SF6 (Sulfur hexafluoride) is used, is considered of high importance due to the risk of high environmental pollution. Therefore reduction of leakage is a key issue to be solved. Recently new eco-efficient gas mixture media were developed, namely fluoroketone-based gas mixtures with technical air or CO₂ as a carrier gas. Although, the new eco-efficient gas mixture is more environmentally friendly, CO₂ still exhibits a Global Warming Potential (GWP). The GWP of CO₂ is much lower than that of SF6, however CO₂ permeation is higher. EP0457081 A1 and GB1217810 A are examples of prior art documents disclosing insulators with incorporated grooves for o-rings and electric field electrodes.

Therefore, in view of the above, there is a need for an improved insulation which at least partially overcomes the problems of conventional insulators, particularly with respect to their sealing performance.

### SUMMARY

In light of the above, an insulator for installation in a high-voltage switching system according to the independent claim is provided. Further aspects, benefits, and features of the present disclosure are apparent from the claims, the description, and the accompanying drawings.

According to an aspect of the present disclosure, an insulator for installation in a high-voltage switching system is provided. The insulator includes an electrically insulating disc-shaped carrier element, wherein the carrier element has a first disc-shaped surface including a first groove configured for accommodating a first sealing element and an opposing second disc-shaped surface including a second groove configured for accommodating a second sealing element. At least a bottom of the first groove is provided by a first metallic element embedded in the carrier element, and wherein at least a bottom of the second groove is provided by a second metallic element embedded in the carrier element.

Accordingly, embodiments of the insulator as described herein have the advantage that the insulator provides for a sealing which works for any gas, i.e. the sealing performance is independent of the gas employed. In other words, embodiments of the insulator as described herein provide for an improved sealing, particularly for light gases such as SF6 where conventional polymer based sealing strategies show difficulties. Further, embodiments of the insulator as described herein beneficially provide for a sealing with a lower desorption and a higher chemical resistance (e.g. against decomposition products) compared to sealing strategies of conventional insulators for installation in a high-voltage switching system. For example, the gas tightness of a metal sealing which can be realized with embodiments of the insulator as described herein can be three orders of magnitude better compared to standard EPDM or NBR sealings, depending on the molecule size of the gas.

In particular, it is to be understood that embodiments of the insulator as described herein can be configured such that only a low outgassing or even no permeation of the employed gas can be provided. Moreover, compared to conventional sealing solutions, embodiments of the insulator as described herein in which metallic sealing interfaces are realized instead of polymeric sealing interfaces, a sealing can be provided which works up to very high temperatures. Accordingly, embodiments of the insulator as described herein show a better aging behavior, i.e. the chemical and physical properties of the sealing interfaces do not change much over time.

Further, embodiments of the insulator as described herein provide for homogeneous sealing surfaces out of same material (metal/metal contacts instead of metal/polymer contact) which are well defined and are easy machinable due to their metallic nature.

Accordingly, embodiments of the insulator as described herein provide for an improvement of sealing quality as the final leakage rate can be decreased by use of non-permeable metal sealing, e.g. in the form of a metallic C-ring. Moreover, beneficially embodiments of the insulator as described herein provide for a sealing solution for which the current design of the GIS installation in which the insulator is employed does not need to be changed.

According to another aspect of the present disclosure, a use of an insulator according to any embodiments described herein is provided. In particular, the insulator according to any embodiments described herein is used for providing a sealing between a first compartment and a second compartment of a high-voltage switching system, for example a gas insulated switch gear.

According to a further aspect of the present disclosure, a high-voltage switching system, particularly a gas insulated switch gear, including an insulator according to any embodiments described herein is provided. Accordingly, an improved high-voltage switching system, particularly with respect to the gas sealing properties, can be provided.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
Fig. 1 shows a schematic cross-sectional view of an insulator according to embodiments described herein;
Fig. 2 shows a schematic front view of an insulator according to embodiments described herein;
Fig. 3 shows a schematic sectional view of a portion of an insulator according to embodiments described herein;
Fig. 4 shows a schematic sectional view of a portion of an insulator according to further embodiments described herein;
Fig. 5 shows a schematic perspective view of an exemplary embodiment of an insert a for an insulator according to embodiments described herein,
Fig. 6 shows a schematic cross-sectional view of an insulator provided in a high-voltage switching system according to embodiments described herein, and
Fig. 7 shows a detailed schematic cross-sectional view of a portion of an insulator in a mounted state according to yet further embodiments described herein.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

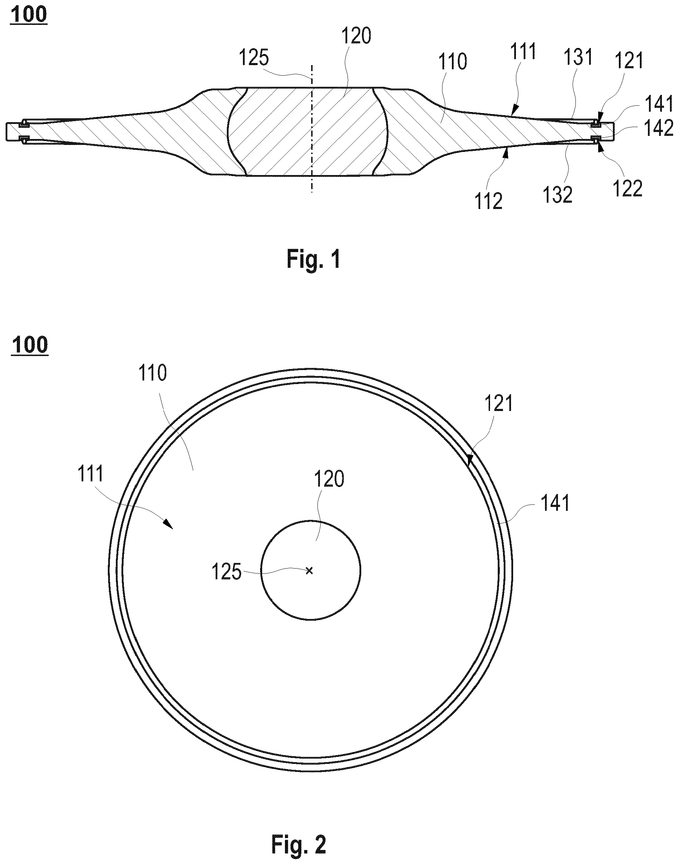

Fig. 1 shows a schematic cross-sectional view of an insulator 100 according to embodiments described herein. In particular, the insulator 100 as described herein is configured for installation in a high-voltage switching system. As exemplarily shown in Fig. 1, according to embodiments which can be combined with any other embodiments described herein, the insulator includes an electrically insulating disc-shaped carrier element 110. The carrier element 110 has a first disc-shaped surface 111 including a first groove 121 configured for accommodating a first sealing element 131. Further, the carrier element 110 has an opposing second disc-shaped surface 112 including a second groove 122 configured for accommodating a second sealing element 132. Typically, at least a bottom of the first groove 121 is provided by a first metallic element 141 embedded in the carrier element 110. Additionally, at least a bottom of the second groove 122 is provided by a second metallic element 142 embedded in the carrier element 110.

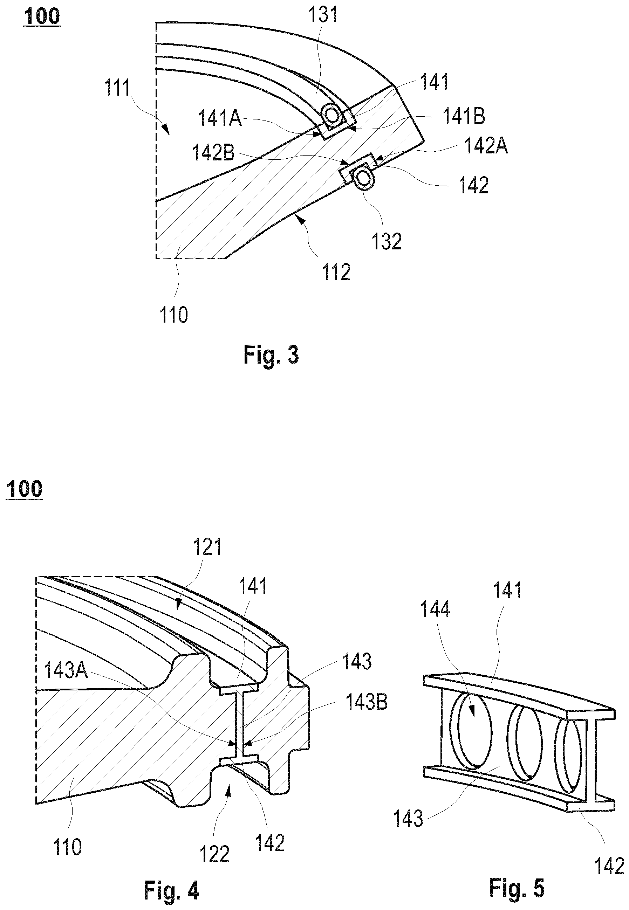

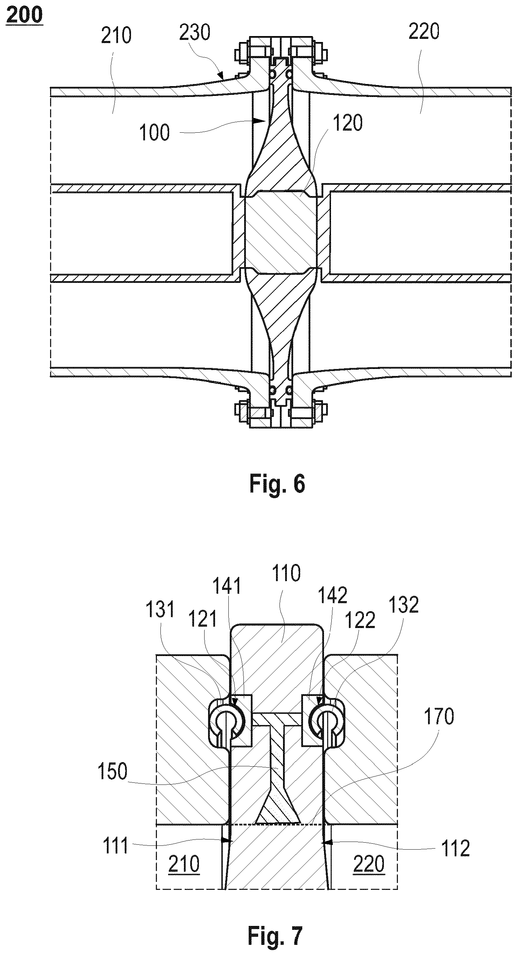

For instance, the first sealing element 131 and the second sealing element 132 can be a metallic ring element, e.g. a metallic O-ring as shown in Fig. 3 or a metallic C-ring as shown in Fig. 7. In particular, the first sealing element 131 and the second sealing element 132 may be made of a metal, for example stainless steel. As exemplarily shown in Fig. 7, the first groove 121 and/or the second groove 122 can be configured such that a form-fit to the respective sealing elements 131, 132 is provided. In particular, the first groove 121 and/or the second groove 122 can be configured to have an approximately semi-circular cross-section, for example for providing a form fit for O-ring-like or C-ring-like sealing elements.

Accordingly, embodiments of the insulator as described in which homogeneous sealing surfaces out of same material (metal/metal contacts) are realized have the advantage that the insulator provides for a sealing which works for any gas, i.e. the sealing performance is independent of the gas employed. Further, providing metallic sealing surface has the advantage that the sealing surfaces are machineable such that the sealing performance can be optimized, e.g. by providing very smooth sealing surfaces.

Further, the first sealing element 131 and the second sealing element 132 can include a coating, e.g. a tin coating, which may be beneficial for improving the sealing performance. In particular, tin as coating material can be beneficial for an improved sealing performance since tin is relatively soft compared to the mating sealing surfaces (e.g. the mating sealing surfaces provided by the first metallic element 141 and the second metallic element 142 as well as the respective sealing surfaces of the housing 230, e.g. a cast aluminum housing, of the high-voltage switching system) such that the tin coating may plastically deform when the insulator is installed a high-voltage switching system 200, as exemplarily shown in Fig. 6.

As exemplarily shown in the schematic front view of the insulator 100 depicted in Fig. 2, the carrier element 110 can be configured as a circular disk. Accordingly, the first groove 121 and the second groove 122 can be configured as circular grooves, particularly provided in an edge region of the first disc-shaped surface 111 and the second disc-shaped surface 112, respectively. Further, as exemplarily shown in Figs. 1 and 2, the carrier element 110 can be mounted to an electrode 120 in a form-fit and non-rotatable manner. Typically, the electrode 120 is provided as a central element of the insulator 100. In particular, as exemplarily shown in Figs. 1 and 2, the electrode 120 may include a rotational axis 125 which can be a symmetry axis.

According to embodiments which can be combined with any other embodiments described herein, the first metallic element 141 and the second metallic element 142 can be ring-like elements. For instance, as exemplarily shown for the first metallic element 141 in Fig. 2, the first metallic element 141 and the second metallic element 142 can be configured as circular ring-like elements. In particular, the first metallic element 141 and the second metallic element 142 can be configured such that the first metallic element 141 and the second metallic element 142 surround the central electrode 120, as exemplarily shown in Figs. 1 and 2. Further, the first metallic element 141 and/or the second metallic element 142 can be made of aluminum or an aluminum alloy.

With exemplary reference to Fig. 3, according to embodiments which can be combined with any other embodiments described herein, the bottom of the first groove 121 and the side portions of the first groove 121 can be provided by the first metallic element 141. Accordingly, the bottom of the second groove 122 and side portions of the second groove 122 can be provided by the second metallic element 142.

With exemplary reference to Fig. 3, according to embodiments which can be combined with any other embodiments described herein, the first metallic element 141 typically includes at least one surface 141A, 141B being in contact with the carrier element 110. For instance, the at least one surface can be a side surface 141A of the first metallic element 141, as exemplarily indicated in Fig. 3. Additionally or alternatively, the at least one surface can be a bottom surface 141B of the first metallic element 141. Typically, the bottom surface 141B of the first metallic element 141 connects the side surfaces 141A of the first metallic element 141. For instance, the at least one surface 141A, 141B of the first metallic element 141 can be configured to have a surface roughness of 5 µm ≤ Ra ≤ 20 µm, particularly Ra = 8 µm. For example, the at least one surface 141A, 141B of the first metallic element 141 can be surface treated by sand blasting in order to obtain the surface roughness. Accordingly, beneficially the integration or embedding of the first metallic element 141 into the carrier element 110 can be improved.

Accordingly, as exemplarily shown in Fig. 3, the second metallic element 142 typically includes at least one surface 142A, 142B being in contact with the carrier element 110. For instance, the at least one surface can be a side surface 142A of the second metallic element 142, as exemplarily indicated in Fig. 3. Additionally or alternatively, the at least one surface can be a bottom surface 142B of the second metallic element 142. Typically, the bottom surface 142B of the second metallic element 142 connects the side surfaces 142A of the second metallic element 142. For instance, the at least one surface 142A, 142B of the second metallic element 142 can be configured to have a surface roughness of 5 µm ≤ Ra ≤ 20 µm, particularly Ra = 8 µm. For example, the at least one surface 142A, 142B of the second metallic element 142 can be surface treated by sand blasting in order to obtain the surface roughness. Accordingly, beneficially the integration or embedding of the second metallic element 142 into the carrier element 110 can be improved.

With exemplary reference to Fig. 4, according to embodiments which can be combined with any other embodiments described herein, the first metallic element 141 and the second metallic element 142 can be integrally connected by a connecting portion 143. By providing a connecting potion 143 between the first metallic element 141 and the second metallic element 142 the insulator can beneficially be mechanically stabilized in the sealing pressure region. Further, the connecting potion 143 may provide to the possibility to provide an electrical connection between respective flanges of a first compartment and a second compartment of a high-voltage switching system.

For instance, the connecting portion 143 can be made of metal, particularly of aluminum or an aluminum alloy. Further, typically the connecting portion 143 includes at least one contact surface 143A, 143B being in contact with the carrier element 110. For instance, the at least one contact surface the connecting portion 143 can include a first contact surface 143A and an opposing second contact surface 143B, as exemplarily indicated in Fig. 4. Further, the at least one contact surface 143A, 143B of the connecting portion 143 may be configured to have a surface roughness of 5 µm ≤ Ra ≤ 20 µm, particularly Ra = 8 µm. For example, the at least one surface 143A, 143B of the connecting portion 143 can be surface treated by sand blasting in order to obtain the surface roughness. Accordingly, beneficially the integration or embedding of the connecting portion 143 into the carrier element 110 can be improved.

With exemplary reference to Figs. 4 and 5, it is to be understood that the first metallic element 141, the second metallic element 142 and the connecting portion 143 can be an integrally formed insert which is embedded into the carrier element 110. For instance, the integrally formed insert can be casted in the carrier element 110. Accordingly, the insert and can be employed in connection with the sealing elements 131, 132 (e.g. metal sealing rings) to seal the compartments 210, 220 on the respective flange of the housing 230. By providing an integrally formed insert a simplified mold assembly during fabrication of the insulator can be provided. Further, an integrally formed insert may be beneficial for increasing mechanical strength as well as the gas-tightness.

With exemplary reference to Fig. 5, according to embodiments which can be combined with any other embodiments described herein, the connecting portion 143 may include at least one opening 144. Accordingly, when the connecting portion 143 is embedded in the carrier element 110, the at least one opening 144 of the connecting portion 143 is filled with material of the carrier element, e.g. during manufacturing of the insulator by casting. Accordingly, it is to be understood, that such a configuration is beneficial for casting the whole insulator from the top.

For instance, the carrier element 110 can include a matrix material including a thermoplastic material. According to one example, the matrix material of the carrier element 110 can include a thermoplastic material and a filling material (e.g. 20-30% glass fibers) for enhancing the mechanical properties of the carrier element. Alternatively, the carrier element 110 can include a matrix material including epoxy. For instance, the matrix material of the carrier element 110 can include Al₂O₃ and a content of epoxy of 25 wt% - 40 wt%. Accordingly, openings provided in the connecting portion 143 provide for an improved coupling between the metal insert and the insulator body, i.e. the carrier element 110, because the openings allow epoxy or thermoplastic material to penetrate the metal insert and incorporate it well within insulator body.

According to embodiments which can be combined with any other embodiments described herein, the first metallic element 141 and the second metallic element 142 are embedded into the carrier element 110 using a casting or injection molding process. Accordingly, it is to be understood that in the case a connecting portion 143 is provided also the connecting portion can be enclosed into the carrier element 110 using a casting or injection molding process. For instance, the first metallic element 141, the second metallic element 142 and the connecting portion 143 can be an integrally formed as an insert which is embedded into the carrier element 110 using a casting or injection molding process. In particular, in the case an epoxy-containing matrix material is used for the carrier element, a casting process may be beneficial. In the case a thermoplastic material containing matrix material is used for the carrier element, an injection molding process may be preferred.

Accordingly, the insert, e.g. including the first metallic element 141 and the second metallic element 142 connected by the connecting portion 143, can be configured such that the insert can acquire load provided by the sealing elements 131, 132 (e.g. a metallic O-ring as shown in Fig. 3 or a metallic C-ring as shown in Fig. 7) in an installation state, as exemplarily shown in Fig. 6. In particular, embodiments of the insulator as described herein is beneficially configured such that the spring force applied by the sealing elements in an installation state of the insulator does not directly affect the insulator carrier element, e.g. made of a thermoplastic material or epoxy structure. Such a configuration approach provides for the possibility to apply higher compression force on the sealing elements 131, 132 while at the same time the risk of insulator surface damage or insulator break is reduced or even eliminated. Accordingly, an improved sealing is provided.

With exemplary reference to Fig. 4, according to embodiments which can be combined with any other embodiments described herein, the bottom of the first groove 121 provided by the first metallic element 141 can be in the form of a flat surface. Additionally or alternatively the bottom of the second groove 122 provided by the second metallic element 142 can in the form of a flat surface. By providing an insulator having a the first metallic element 141 and a second metallic element 142 having a flat sealing interface, as exemplarily shown in Fig. 4, a low-cost solution for an insulator with improved sealing properties can be provided.

According to embodiments which can be combined with any other embodiments described herein, the first groove 121 can be dimensioned such that a radial gap between the first groove 121, particularly the side surfaces of the first groove 121, and the first sealing element 131 is provided when the first sealing element 131 is accommodated in the first groove 121. Additionally or alternatively the second groove 122 can be dimensioned such that a radial gap between the second groove 122, particularly the side surfaces of the second groove 122 and the second sealing element 132 is provided when the second sealing element 132 is accommodated in the second groove 122. Accordingly, beneficially only the bottom of the first groove 121 and only the bottom of the second groove 122 provide for the metallic sealing surface.

With exemplary reference to Fig. 7, according to embodiments which can be combined with any other embodiments described herein, the first groove 121 provided by the first metallic element 141 can be in the form of a curved recess for accommodating the first sealing element 131. Additionally or alternatively, the second groove 122 provided by the second metallic element 142 can be in the form of a curved recess for accommodating the second sealing element 132. Such a configuration may be beneficial for providing a self-centering of the sealing elements 131, 132 during installation of the insulator in a high-voltage switching system 200, as exemplarily shown in Fig. 6. Further, such a configuration may be beneficial for increasing the sealing surface, particularly when the sealing element is tightly fitted into the curved recess.

With exemplary reference to Fig. 7, according to embodiments which can be combined with any other embodiments described herein, the insulator may further include an electrically conductive insert 150 embedded in the carrier element 110. In particular, the conductive insert 150 may be arranged and configured to control electric field lines from the first disc-shaped surface 111 to the second disc-shaped surface 112 in an installation state of the insulator. For illustration purpose, a field line is indicated by reference number 170 in Fig 7.

Accordingly, an electrically conductive insert may beneficially be provided for controlling electric field lines.

Accordingly, embodiments of the insulator as described herein can beneficially be used for providing a sealing between a first compartment 210 and a second compartment 220 of a high-voltage switching system 200, as exemplarily shown in Fig. 6. For instance, the high-voltage switching system 200 can be a gas insulated switch gear.

A further advantage of the embodiments of the insulator as described herein is that it improves gas tightness of the device without necessity of mechanical redesign of the device, which provides for the possibility to apply the solution to improve gas tightness of the existing gas insulated electrical equipment installations.

According to a further aspect of the present disclosure, a method of manufacturing an insulator 100 for installation in a high-voltage switching system is provided. The method includes casting at least one metallic element 141, 142 into an electrically insulating disc-shaped carrier element 110, such that the at least one metallic element 141, 142 provides at least a bottom of a first groove 121 provided in a first disc-shaped surface 111 of the carrier element 110 and that the at least one metallic element 141, 142 provides at least a bottom of a second groove 122 provided in an opposing second disc-shaped surface 112 of the carrier element 110.

Accordingly, beneficially the methods provides the possibility to manufacture an insulator which has a metal cast-in sealing face implemented during fabrication of the insulator. Such a sealing could be used for example to seal gas insulated switchgears (GIS) compartments as well as any other application where the replacement of a conventional sealing ring could be beneficial.

Accordingly, in view of the embodiments described herein, it is to be understood that by providing an insulator, e.g. of epoxy, with an incorporated metal provides for the possibility to enhance the tightness of gas insulated electrical equipment. In particular, the sealing concept as described herein works gas-independently, aging is easier predictable and less severe, such that almost no desorption and high chemical resistance in aggressive environment can be provided. Thus, embodiments of the insulator as described herein beneficially provide a gas tightness which can be three orders of magnitude better compared to standard EPDM or NBR sealings, depending on the molecule size of the gas.

Further, the specially designed metal insert as described herein allows to control roughness at the interface with the metal sealing elements, e.g. a metal C-rings, in order to obtain the best sealing conditions. Further, epoxy/metal mismatch can be avoided. Additionally, the insert can be configured to take over the force from metal sealing elements, e.g. C-ring metal C-rings, and as a result thereof the risk of breakage of the insulator under C-ring spring force can be reduced or even eliminated.

## Claims

1. Insulator (100) for installation in a high-voltage switching system,
wherein the insulator comprises an electrically insulating disc-shaped carrier element (110),
wherein the carrier element (110) has a first disc-shaped surface (111) including a first groove (121) configured for accommodating a first sealing element (131) and an opposing second disc-shaped surface (112) including a second groove (122) configured for accommodating a second sealing element (132),
**characterized in that** at least a bottom of the first groove (121) is provided by a first metallic element (141) embedded in the carrier element (110), and
at least a bottom of the second groove (122) is provided by a second metallic element (142) embedded in the carrier element (110).

2. Insulator (100) according to claim 1, wherein the bottom of the first groove (121) and side portions of the first groove (121) are provided by the first metallic element (141).

3. Insulator (100) according to claim 1 or 2, wherein the bottom of the second groove (122) and side portions of the second groove (122) are provided by the second metallic element (142).

4. Insulator (100) according to any of claims 1 to 3, wherein the first metallic element (141) and the second metallic element (142) are ring-like elements.

5. Insulator (100) according to any of claims 1 to 4, wherein the first metallic element (141) and/or the second metallic element (142) are made of aluminum or an aluminum alloy.

6. Insulator (100) according to any of claims 1 to 5, wherein the first metallic element (141) and/or the second metallic element (142) comprise at least one surface (141A, 141B, 142A, 142B) being in contact with the carrier element (110), wherein the at least one surface has a surface roughness of 5 µm ≤ Ra ≤ 20 µm, particularly Ra = 8 µm.

7. Insulator (100) according to any of claims 1 to 6, wherein the first metallic element (141) and the second metallic element (142) are integrally connected by a connecting portion (143).

8. Insulator (100) according to claim 7, wherein the connecting portion (143) is made of metal, particularly aluminum or an aluminum alloy.

9. Insulator (100) according to claim 7 or 8, wherein the connecting portion (143), comprises at least one contact surface (143A, 143B) being in contact with the carrier element (110), wherein the at least one contact surface has a surface roughness of 5 µm ≤ Ra ≤ 20 µm, particularly Ra = 8 µm.

10. Insulator (100) according to any of claims 7 to 9, wherein the connecting portion (143) comprises at least one opening (144) filled with material of the carrier element.

11. Insulator (100) according to any of claims 1 to 10, wherein the carrier element (110) includes a matrix material including a thermoplastic material or epoxy.

12. Insulator (100) according to any of claims 1 to 11, wherein the first metallic element (141) and the second metallic element (142) are embedded into the carrier element (110) using a casting or injection molding process.

13. Insulator (100) according to any of claims 1 to 12 wherein the first groove (121) provided by the first metallic element (141) is in the form of a curved recess for accommodating the first sealing element (131), and/or wherein the second groove (122) provided by the second metallic element (142) is in the form of a curved recess for accommodating the second sealing element (132).

14. Insulator (100) according to any of claims 1 to 12, wherein the bottom of the first groove (121) provided by the first metallic element (141) is in the form of a flat surface, and/or wherein the bottom of the second groove (122) provided by the second metallic element (142) is in the form of a flat surface.

15. Insulator (100) according to any of claims 1 to 14, wherein the first groove (121) is dimensioned such that a radial gap between the first groove (121) and the first sealing element (131) is provided when the first sealing element (131) is accommodated in the first groove (121), and/or wherein second groove (122) is dimensioned such that a radial gap between the second groove (122) and the second sealing element (132) is provided when the second sealing element (132) is accommodated in the second groove (122).

16. Insulator (100) according to any of claims 1 to 15, further comprising an electrically conductive insert (150) embedded in the carrier element (110), wherein the conductive insert (150) is arranged and configured to control electric field lines from the first disc-shaped surface (111) to the second disc-shaped surface (112) in an installation state of the insulator.

17. Insulator (100) according to any of claims 1 to 16, wherein the carrier element (110) is mounted non-rotatable to an electrode (120) in a form-fit manner.

18. Use of an insulator (100) according to any of claims 1 to 17 for providing a sealing between a first compartment (210) and a second compartment (220) of a high-voltage switching system (200), particularly a gas insulated switch gear.

19. High-voltage switching system (200), particularly a gas insulated switch gear, comprising an insulator (100) according to any of claims 1 to 17.

## Patentansprüche

1. Isolator (100) zum Einbau in einem Hochspannungsschaltsystem,
wobei der Isolator ein elektrisch isolierendes scheibenförmiges Trägerelement (110) umfasst,
wobei das Trägerelement (110) eine erste scheibenförmige Fläche (111) mit einer ersten Nut (121), die zur Aufnahme eines ersten Dichtungselements (131) ausgebildet ist, und eine gegenüberliegende zweite scheibenförmige Fläche (112) mit einer zweiten Nut (122), die zur Aufnahme eines zweiten Dichtungselements (132) ausgebildet ist, aufweist,
**dadurch gekennzeichnet, dass**
zumindest ein Boden der ersten Nut (121) durch ein erstes metallisches Element (141) bereitgestellt ist, das im Trägerelement (110) eingebettet ist, und
zumindest ein Boden der zweiten Nut (122) durch ein zweites metallisches Element (142) bereitgestellt ist, das im Trägerelement (110) eingebettet ist.

2. Isolator (100) nach Anspruch 1, wobei der Boden der ersten Nut (121) und Seitenabschnitte der ersten Nut (121) durch das erste metallische Element (141) bereitgestellt sind.

3. Isolator (100) nach Anspruch 1 oder 2, wobei der Boden der zweiten Nut (122) und Seitenabschnitte der zweiten Nut (122) durch das zweite metallische Element (142) bereitgestellt sind.

4. Isolator (100) nach einem der Ansprüche 1 bis 3, wobei das erste metallische Element (141) und das zweite metallische Element (142) ringartige Elemente sind.

5. Isolator (100) nach einem der Ansprüche 1 bis 4, wobei das erste metallische Element (141) und/oder das zweite metallische Element (142) aus Aluminium oder einer Aluminiumlegierung hergestellt sind.

6. Isolator (100) nach einem der Ansprüche 1 bis 5, wobei das erste metallische Element (141) und/oder das zweite metallische Element (142) mindestens eine Fläche (141A, 141B, 142A, 142B) umfasst, die mit dem Trägerelement (110) in Kontakt steht, wobei die mindestens eine Fläche eine Oberflächenrauheit von 5 µm ≤ Ra ≤ 20 µm, insbesondere Ra = 8 µm, aufweist.

7. Isolator (100) nach einem der Ansprüche 1 bis 6, wobei das erste metallische Element (141) und das zweite metallische Element (142) durch einen Verbindungsabschnitt (143) einstückig verbunden sind.

8. Isolator (100) nach Anspruch 7, wobei der Verbindungsabschnitt (143) aus Metall, insbesondere Aluminium oder einer Aluminiumlegierung hergestellt ist.

9. Isolator (100) nach Anspruch 7 oder 8, wobei der Verbindungsabschnitt (143) mindestens eine Kontaktfläche (143A, 143B) umfasst, die mit dem Trägerelement (110) in Kontakt steht, wobei die mindestens eine Kontaktfläche eine Oberflächenrauheit von 5 µm ≤ Ra ≤ 20 µm, insbesondere Ra = 8 µm aufweist.

10. Isolator (100) nach einem der Ansprüche 7 bis 9, wobei der Verbindungsabschnitt (143) mindestens eine Öffnung (144) umfasst, die mit Material des Trägerelements gefüllt ist.

11. Isolator (100) nach einem der Ansprüche 1 bis 10, wobei das Trägerelement (110) ein Matrixmaterial aufweist, das ein thermoplastisches Material oder Epoxid umfasst.

12. Isolator (100) nach einem der Ansprüche 1 bis 11, wobei das erste metallische Element (141) und das zweite metallische Element (142) mithilfe eines Guss- oder Spritzgussverfahrens in dem Trägerelement (110) eingebettet sind.

13. Isolator (100) nach einem der Ansprüche 1 bis 12, wobei die erste Nut (121), die durch das erste metallische Element (141) bereitgestellt ist, in Form einer gekrümmten Ausnehmung zur Aufnahme des ersten Dichtungselements (131) vorliegt, und/oder wobei die zweite Nut (122), die durch das zweite metallische Element (142) bereitstellt ist, in Form einer gekrümmten Ausnehmung zur Aufnahme des zweiten Dichtungselements (132) vorliegt.

14. Isolator (100) nach einem der Ansprüche 1 bis 12, wobei der Boden der ersten Nut (121), der durch das erste metallische Element (141) bereitgestellt ist, in Form einer flachen Fläche vorliegt, und/oder wobei der Boden der zweiten Nut (122), der durch das zweite metallische Element (142) bereitgestellt ist, in Form einer flachen Fläche vorliegt.

15. Isolator (100) nach einem der Ansprüche 1 bis 14, wobei die erste Nut (121) so bemessen ist, dass ein radialer Spalt zwischen der ersten Nut (121) und dem ersten Dichtungselement (131) bereitgestellt ist, wenn das erste Dichtungselement (131) in der ersten Nut (121) aufgenommen ist, und/oder wobei die zweite Nut (122) so bemessen ist, dass ein radialer Spalt zwischen der zweiten Nut (122) und dem zweiten Dichtungselement (132) bereitgestellt ist, wenn das zweite Dichtungselement (132) in der zweiten Nut (122) aufgenommen ist.

16. Isolator (100) nach einem der Ansprüche 1 bis 15, ferner umfassend einen elektrisch leitenden Einsatz (150), der in das Trägerelement (110) eingebettet ist, wobei der leitende Einsatz (150) angeordnet und ausgebildet ist, dass er elektrische Feldlinien von der ersten scheibenförmigen Fläche (111) zu der zweiten scheibenförmigen Fläche (112) in einem Einbauzustand des Isolators zu steuern.

17. Isolator (100) nach einem der Ansprüche 1 bis 16, wobei das Trägerelement (110) formschlüssig nicht drehbar an einer Elektrode (120) angebracht ist.

18. Nutzung eines Isolators (100) nach einem der Ansprüche 1 bis 17 zur Bereitstellung einer Dichtung zwischen einem ersten Fach (210) und einem zweiten Fach (220) eines Hochspannungsschaltsystems (200), insbesondere einer gasinsolierten Schaltanlage.

19. Hochspannungsschaltsystem (200), insbesondere gasisolierte Schaltanlage, umfassend einen Isolator (100) nach einem der Ansprüche 1 bis 17.

## Revendications

1. Isolateur (100) pour l'installation dans un système de commutation haute tension,
l'isolateur comprenant un élément support en forme de disque électriquement isolateur (110),
l'élément support (110) ayant une première surface en forme de disque (111) comprenant une première rainure (121) configurée pour recevoir un premier élément d'étanchéité (131) et une seconde surface opposée en forme de disque (112) comprenant une seconde rainure (122) configurée pour recevoir un second élément d'étanchéité (132),
**caractérisé en ce que**
au moins un fond de la première rainure (121) est fourni par un premier élément métallique (141) intégré dans l'élément support (110), et
au moins un fond de la seconde rainure (122) est fourni par un second élément métallique (142) intégré dans l'élément support (110).

2. Isolateur (100) selon la revendication 1, le fond de la première rainure (121) et les parties latérales de la première rainure (121) étant fournis par le premier élément métallique (141).

3. Isolateur (100) selon la revendication 1 ou 2, le fond de la seconde rainure (122) et les parties latérales de la seconde rainure (122) étant fournis par le second élément métallique (142).

4. Isolateur (100) selon l'une quelconque des revendications 1 à 3, le premier élément métallique (141) et le second élément métallique (142) étant des éléments en forme d'anneau.

5. Isolateur (100) selon l'une quelconque des revendications 1 à 4, le premier élément métallique (141) et/ou le second élément métallique (142) étant constitués d'aluminium ou d'un alliage d'aluminium.

6. Isolateur (100) selon l'une quelconque des revendications 1 à 5, le premier élément métallique (141) et/ou le second élément métallique (142) comprenant au moins une surface (141A, 141B, 142A, 142B) qui est en contact avec l'élément support (110), l'au moins une surface ayant une rugosité de surface de 5 µm ≤ Ra ≤ 20 µm, en particulier Ra = 8 µm.

7. Isolateur (100) selon l'une quelconque des revendications 1 à 6, le premier élément métallique (141) et le second élément métallique (142) étant intégralement connectés par une partie de connexion (143).

8. Isolateur (100) selon la revendication 7, la partie de connexion (143) étant constituée de métal, en particulier d'aluminium ou d'un alliage d'aluminium.

9. Isolateur (100) selon la revendication 7 ou 8, la partie de connexion (143) comprenant au moins une surface de contact (143A, 143B) qui est en contact avec l'élément support (110), l'au moins une surface de contact ayant une rugosité de surface de 5 µm ≤ Ra ≤ 20 µm, en particulier Ra = 8 µm.

10. Isolateur (100) selon l'une quelconque des revendications 7 à 9, la partie de connexion (143) comprenant au moins une ouverture (144) remplie de matériau de l'élément support.

11. Isolateur (100) selon l'une quelconque des revendications 1 à 10, l'élément support (110) comprenant un matériau de matrice comprenant un matériau thermoplastique ou un époxy.

12. Isolateur (100) selon l'une quelconque des revendications 1 à 11, le premier élément métallique (141) et le second élément métallique (142) étant intégrés dans l'élément support (110) en utilisant un procédé de moulage par coulée ou par injection.

13. Isolateur (100) selon l'une quelconque des revendications 1 à 12, la première rainure (121) fournie par le premier élément métallique (141) étant sous la forme d'un évidement incurvé pour recevoir le premier élément d'étanchéité (131), et/ou la seconde rainure (122) fournie par le second élément métallique (142) étant sous la forme d'un évidement incurvé pour recevoir le second élément d'étanchéité (132).

14. Isolateur (100) selon l'une quelconque des revendications 1 à 12, le fond de la première rainure (121) fournie par le premier élément métallique (141) étant sous la forme d'une surface plane, et/ou le fond de la seconde rainure (122) fournie par le second élément métallique (142) étant sous la forme d'une surface plane.

15. Isolateur (100) selon l'une quelconque des revendications 1 à 14, la première rainure (121) étant dimensionnée de telle sorte qu'un espace radial entre la première rainure (121) et le premier élément d'étanchéité (131) est fourni lorsque le premier élément d'étanchéité (131) est logé dans la première rainure (121), et/ou la seconde rainure (122) étant dimensionnée de telle sorte qu'un espace radial entre la seconde rainure (122) et le second élément d'étanchéité (132) est fourni lorsque le second élément d'étanchéité (132) est logé dans la seconde rainure (122).

16. Isolateur (100) selon l'une quelconque des revendications 1 à 15, comprenant en outre un insert électroconducteur (150) intégré dans l'élément support (110), l'insert conducteur (150) étant agencé et configuré pour commander des lignes de champ électrique depuis la première surface en forme de disque (111) vers la seconde surface en forme de disque (112) dans un état d'installation de l'isolateur.

17. Isolateur (100) selon l'une quelconque des revendications 1 à 16, l'élément support (110) étant monté de manière non rotative sur une électrode (120) par complémentarité de forme.

18. Utilisation d'un isolateur (100) selon l'une quelconque des revendications 1 à 17 pour fournir l'étanchéité entre un premier compartiment (210) et un second compartiment (220) d'un système de commutation haute tension (200), en particulier d'un appareillage de commutation à isolation gazeuse.

19. Système de commutation haute tension (200), en particulier un appareillage de commutation à isolation gazeuse, comprenant un isolateur (100) selon l'une quelconque des revendications 1 à 17.
